(19) Europäisches Patentamt
European Patent Office
Office européen des brevets

(11) **EP 2 087 796 A1**

(12) **EUROPEAN PATENT APPLICATION**
published in accordance with Art. 153(4) EPC

(43) Date of publication:
**12.08.2009 Bulletin 2009/33**

(21) Application number: **07828081.5**

(22) Date of filing: **27.11.2007**

(51) Int Cl.:
**A21D 1/03** (2006.01) **A21D 13/08** (2006.01)

(86) International application number:
**PCT/JP2007/001304**

(87) International publication number:
**WO 2008/068890 (12.06.2008 Gazette 2008/24)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **01.12.2006 JP 2006325484
31.08.2007 JP 2007225723**

(71) Applicant: **Mitsubishi Chemical Corporation
Tokyo 108-0014 (JP)**

(72) Inventor: **OGAWA, Akihiro
Yokohama-shi
Kanagawa 227-8502 (JP)**

(74) Representative: **HOFFMANN EITLE
Patent- und Rechtsanwälte
Arabellastraße 4
81925 München (DE)**

(54) **QUALITY IMPROVING AGENT FOR FOODS AND FOODS**

(57) The present invention relates to a food improver which can be produced by a simple method, is excellent in storage stability, and allows various foods added therewith to maintain taste or flavor as exhibited immediately after processed and cooked, for a long period of time. The food improver comprises a dispersion formed by dispersing a lamellar structural component of an organic acid monoglyceride in an aqueous solution comprising an emulsifier and a sugar. In the preferred embodiments of the present invention, there are used a sucrose fatty acid ester or a polyglycerol fatty acid ester as the emulsifier, an oligosaccharide as the sugar, and succinic acid monoglyceride as the organic acid monoglyceride.

EP 2 087 796 A1

**Description**

TECHNICAL FIELD

The present invention relates to a food improver and a food.

BACKGROUND ART

Starch-containing foods tend to suffer from accelerated retrogradation of starch grains therein after processed or cooked and during storage thereof. As a result, these foods tend to lose wet feel and have dry feel, thereby exhibiting a hard taste. Further, the foods tend to sometimes generate rotten odor owing to retrogradation. In addition, frozen foods tend to suffer from formation of bulky ice crystals during freeze-storage or breakage of a food structure owing to vaporization of water therefrom as well as release of water therefrom upon defrosting. Further, bean jams contained in rice cakes or dumplings also tend to suffer from separation of water therefrom with the passage of time.

To solve the above problems encountered during storage of foods, several methods using a food improver have been conventionally proposed.

For example, there is known a method of not only maintaining softness and wet feel of frozen foods even after freeze-storage but also preventing deterioration in taste and flavor of the frozen foods by adding thereto an emulsified fat and oil composition obtained by mixing fat and oil, an organic acid monoglyceride, a diglyceride, an emulsifier, a sugar and water with each other at a specific mixing ratio (refer to Patent Document 1).

There is also known a method of suppressing occurrence of an retrogradation phenomenon of starches such as hardening, drying and deteriorated taste upon freeze-storage or refrigeration by kneading an oil-in-water type emulsified fat and oil composition comprising fat and oil, dextrin and an emulsifier in a dough of starch-based foods (refer to Patent Document 2).

In addition, there is known a method utilizing a gelling property of glucomannan. For example, there is known a process for producing a liquid food material having a pH of 4 to 8 which is obtained by uniformly dispersing a W/O emulsion containing an alkaline aqueous solution as an inner phase in a glucomannan-containing sugar solution (refer to Patent Document 3). Also, there is known a method of efficiently improving properties, taste and flavor of various foods as well as storage stability thereof such as chill resistance and freeze resistance by blending the above liquid food material thereto (refer to Patent Document 4). Further, there is known a method of preventing hardening of rice cakes by using pullulan as a natural polysaccharide, a disaccharide and an emulsifier (refer to Patent Document 5).

     Patent Document 1: Japanese Patent Application Laid-Open (KOKAI) No. 5-236919
     Patent Document 2: Japanese Patent Application Laid-Open (KOKAI) No. 2001-95489
     Patent Document 3: Japanese Patent Application Laid-Open (KOKAI) No. 2003-88306
     Patent Document 4: Japanese Patent Application Laid-Open (KOKAI) No. 2003-235474
     Patent Document 5: Japanese Patent Application Laid-Open (KOKAI) No. 5-84046

DISCLOSURE OF THE INVENTION

PROBLEM TO BE SOLVED BY THE INVENTION

However, the conventional techniques have failed to attain fully satisfactory effects for improving a quality of foods. In addition, the above emulsified fat and oil composition has such a problem that the emulsification temperature or time upon production of the composition is hardly controllable, and stability of the resulting composition is hardly maintained. Also, in the method of blending glucomannan in the composition, it is required to use a composite type emulsion in order to gradually interact glucomannan with an alkali, resulting in complicated production process, and further it may be difficult to maintain a stability of the emulsion for a long period of time.

The present invention has been made to solve the above conventional problems. An object of the present invention is to provide a food improver which can be produced by a simple method, is excellent in storage stability, and can maintain taste or flavor of foods immediately after being processed or cooked for a long period of time when adding the food improver to various foods including starch-containing foods, e.g., breads, confections such as madeleines, pao de Castellas and cakes, fillings, and noodles (such as frozen noodles, dried noodles and instant fried noodles); Japanese-style confections such as rice cakes, bean jams and dumplings; daily dishes; marine paste products; and frozen products such as frozen Chinese meat dumplings.

## MEANS FOR SOLVING THE PROBLEM

As a result of the present inventors' earnest study, it has been found that the above object can be readily achieved by the food improver that is produced by dispersing a specific lamellar structural component of an organic acid monoglyceride which can be formed in an aqueous solution thereof, in water in the presence of an emulsifier and a sugar. The present invention has been attained on the basis of the above finding.

Namely, in a first aspect of the present invention, there is provided a food improver comprising a dispersion formed by dispersing a lamellar structural component of an organic acid monoglyceride in an aqueous solution comprising an emulsifier and a sugar. In a second aspect of the present invention, there is provided a food comprising the food improver as defined above.

Also, in a third aspect of the present invention, there is provided a sponge cake comprising a wheat flour, a whole egg and a sugar at a weight ratio of 1:0.5 to 2:0.5 to 2, the sponge cake being produced by baking these components to which the food improver as defined above is added,
wherein when the sponge cake is subjected to measurement of a hardness thereof after preserving the sponge cake at 4°C for one day after the baking and a hardness thereof after preserving the sponge cake at 4°C for one week after the baking by using a rheometer in which a degree of penetration of a plunger into the sponge cake upon measurement of each hardness is set to 15 mm, a change in hardness of the sponge cake between after the one-day preservation and after the one-week preservation is not more than 3.0 N.

Further, in a fourth aspect of the present invention, there is provided a food improver which allows a sponge cake to which the fluid improver is added, to exhibit a change in hardness of not more than 3.0 N as measured by the following evaluation method:

The sponge cake comprising a wheat flour, an egg and a sugar at the same weight ratio to which the food improver is added in an amount of 5% based on the wheat flour, is produced by baking, and then subjected to measurement of a hardness thereof after preserving the sponge cake at 4°C for one day after the baking and a hardness thereof after preserving the sponge cake at 4°C for one week after the baking by using a rheometer in which a degree of penetration of a plunger into the sponge cake upon measurement of each hardness is set to 15 mm, to determine the change in hardness of the sponge cake between after the one-day preservation and after the one-week preservation.

## EFFECT OF THE INVENTION

The food improver of the present invention can be produced by a simple method, is excellent in storage stability, and can maintain taste or flavor of various foods immediately after processed or cooked, for a long period of time when adding the food improver thereto. Meanwhile, it is suggested that the excellent effects of the food improver of the present invention can be attained by prevention of retrogradation of starches and suppression of deterioration of proteins owing to a good water retention power thereof.

## PREFERRED EMBODIMENT FOR CARRYING OUT THE INVENTION

The present invention is described in detail below. First, the food improver of the present invention is explained. The food improver of the present invention comprises an emulsifier, a sugar and a lamellar structural component of an organic acid monoglyceride, and when used together with an alcohol such as ethanol, the food improver can be further enhanced in storage stability.

The emulsifier used in the present invention is not particularly limited, and is preferably a sucrose fatty acid ester or a polyglycerol fatty acid ester.

The sucrose fatty acid ester preferably has a high hydrophilicity (HLB value: 5 to 18) and exhibits an excellent dispersibility in water such that the resultant water dispersion becomes highly viscous at a high temperature. Examples of the constituting fatty acid of the sucrose fatty acid ester include saturated or unsaturated fatty acids having 14 to 22 carbon atoms such as myristic acid, palmitic acid, stearic acid, behenic acid and oleic acid. Among these fatty acids, preferred are saturated fatty acids having 14 to 18 carbon atoms, and more preferred are those fatty acids comprising stearic acid in an amount of not less than 70% by weight.

The polyglycerol fatty acid ester preferably has a high hydrophilicity and exhibits an excellent dispersibility in water such that the resultant water dispersion becomes highly viscous at a high temperature, similarly to the sucrose fatty acid ester. Examples of such a polyglycerol fatty acid ester include those polyglycerol fatty acid esters in which the average polymerization degree of polyglycerol is usually 2 to 20 (preferably 3 to 10), and the constituting fatty acid is a saturated or unsaturated fatty acid having 14 to 22 carbon atoms, and the constituting fatty acid comprises stearic acid in an amount of not less than 70% by weight, similarly to the above sucrose fatty acid ester.

The sugar used in the present invention is not particularly limited. Examples of the sugar include sugars and sugar alcohols such as sugar, glucose, isomerized sugar, maltose, trehalose, sorbitol, multitol, lactitol and erythritol;

various oligosaccharides; and mixtures thereof. Among these sugars, preferred are oligosaccharides.

Examples of the oligosaccharides include maltooligosaccharides (preferably having a polymerization degree of 3 to 7), nigero-oligosaccharides, isomalto-oligosaccharides, panose-oligosaccharides, gentio-oligosaccharides, fructo-oligosaccharides, galacto-oligosaccharides, xylo-oligosaccharides, lacto-oligosaccharides, and syrups thereof. These sugars may be selectively used according to the aimed applications. For example, when it is intended to enhance a freeze resistance of foods, multo-oligosaccharides and sugar alcohols are preferably used. Upon production of the food improver of the present invention, the sugar is usually used in the form of an aqueous solution. The sugar, for example, in the form of a syrup, may be used as such.

The organic acid monoglyceride used in the present invention has such a structure in which one molecule of a fatty acid and one molecule of an organic acid are bonded to one molecule of glycerol, and is generally obtained by reacting an organic acid anhydride with a fatty acid monoglyceride. The reaction may be usually conducted under a solvent-free condition. For example, the reaction between succinic anhydride and a monoglyceride having 18 carbon atoms may be completed at a temperature of about 120°C for about 90 min. The thus obtained organic acid monoglyceride is usually in the form of a mixture comprising an organic acid, unreacted monoglyceride, diglyceride and other oligomers. In the present invention, the thus obtained mixture may be used as such. When a purity of the organic monoglyceride in the food improver should be enhanced, there may be used commercially available products in the form of a distilled monoglyceride. In addition, there may also be used those organic acid monoglycerides in which the organic acid moiety thereof is partially neutralized.

Examples of the organic acid include succinic acid, citric acid, tartaric acid, diacetyl tartaric acid, malic acid, adipic acid, glutaric acid, maleic acid and fumaric acid. Among these organic acids, preferred are succinic acid, citric acid and diacetyl tartaric acid which may be used in the food applications, and more preferred is succinic acid. Examples of the fatty acid of the fatty acid monoglyceride include those saturated or unsaturated fatty acids having 8 to 22 carbon atoms such as caprylic acid, caproic acid, lauric acid, myristic acid, palmitic acid, stearic acid, behenic acid and oleic acid. Among these fatty acids, from the viewpoint of a good flavor, preferred are fatty acids comprising stearic acid as a main component.

The mixture of the above organic acid monoglyceride and water may have various phase conditions depending upon mixing ratio therebetween and temperature change. In the present invention, among these phase conditions, a lamellar structural component (liquid crystal lamellar structural component) having an excellent water retention power is utilized.

The lamellar structural component as used herein means such a component having a two-dimensionally spread structure obtained upon dispersing the organic acid monoglyceride in water, in which hydrophilic group moieties of two molecules of the organic monoglyceride are oriented on the side of water, whereas hydrophobic group moieties (fatty acid) thereof are opposed to each other. It is known that the organic acid monoglyceride is capable of readily forming a lamellar structural component over a wide concentration rage from a low concentration to a high concentration. For example, succinic acid/stearic acid monoglyceride in the form of a sodium salt is capable of forming a lamellar structural component over a high concentration range such as a concentration of from about 35 to about 85% by weight and at a temperature of not lower than 50°C. In this case, the lamellar structural component is observed in the form of stacked layers, so that the aqueous solution comprising such a lamellar structural component exhibits a high viscosity. When the concentration of the organic acid monoglyceride is increased to more than 85% by weight, the aqueous solution is present in a solid condition, whereas when the concentration of the organic acid monoglyceride is reduced to less than 35% by weight, the lamellar structural component is dispersed in the aqueous solution in the form of a dispersion having a relatively low viscosity. In view of a good workability, the lamellar structural component is preferably formed at a low concentration and in a high temperature range.

However, since the lamellar structural component is unstable, it is necessary to stabilize the structure using an emulsifier such as a sucrose fatty acid ester and a polyglycerol fatty acid ester. In the thus stabilized lamellar structural component, a large amount of water is retained between layers thereof owing to a strong hydration power of hydrophilic group moieties thereof, so that migration of water from starch grains can be suppressed.

The lamellar structural component may be prepared in the form of a dispersion by physically stirring and redispersing an aqueous solution comprising the organic acid monoglyceride. The heating temperature used for the above procedure is usually 45 to 100°C, preferably 45 to 80°C and more preferably 50 to 70°C. In the above physically dispersing procedure, for example in order to avoid inclusion of air bubbles in the dispersion, the aqueous solution is slowly stirred using, for example, an anchor mixer.

The presence of the lamellar structural component may be readily confirmed by the observation using, for example, a polarization microscope. When the lamellar structural component is present, a polarization cross pattern is observed. Further, a microstructure of the lamellar structural component may be observed by an electron microscope. Specifically, a sample is frozen with a liquid nitrogen, and cut into pieces under a high vacuum condition. Metal is vapor-deposited on a section of the cut piece to prepare a replica of the sample which is then observed by a transmission electron microscope (TEM). With such a procedure, it is possible to observe the layered lamellar structural component.

The food improver of the present invention may be produced by dispersing the lamellar structural component of the organic acid monoglyceride in an aqueous solution comprising the emulsifier and the sugar. More specifically, the food improver of the present invention is produced by mixing a water dispersion of the emulsifier in a sugar-containing solution, and adding to the resulting mixture, a water dispersion comprising the lamellar structural component of the organic acid monoglyceride, followed by stirring the obtained dispersion. In this case, an alcohol such as ethanol is preferably added to the dispersion to suppress growth of microorganisms during storage of the food improver.

The content of the emulsifier in the food improver is usually 0.1 to 50% by weight, preferably 1 to 20% by weight and more preferably 3 to 10% by weight. When the content of the emulsifier is too small, the lamellar structural component of the organic acid monoglyceride tends to be insufficiently dispersed in the food improver. When the content of the emulsifier is too large, the lamellar structural component of the organic acid monoglyceride tends to exhibit a poor water retention property.

The content of the sugar in the food improver is usually 35 to 85% by weight and preferably 40 to 60% by weight. When the content of the sugar is too small, the resulting food improver tends to be deteriorated in storage stability. When the content of the sugar is too large, some kind of the sugar tends to be crystallized, so that the obtained food improver tends to be undesirably increased in viscosity, resulting in a poor workability.

The content of the organic acid monoglyceride in the food improver is usually 0.1 to 50% by weight, preferably 1 to 20% by weight and more preferably 3 to 10% by weight. When the content of the organic acid monoglyceride is too small, the effect of improving a quality of foods tends to be insufficient. When the content of the organic acid monoglyceride is too large, the organic acid monoglyceride may fail to be uniformly dispersed in the food improver.

The content of water in the food improver is usually 30 to 80% by weight and preferably 40 to 60% by weight. When the content of water is too small, the viscosity of the obtained food improver tends to be undesirably increased, resulting in a poor workability. When the content of water is too large, the contents of the emulsifier, the sugar and the organic acid monoglyceride become comparatively small, so that the effect of the food improver tends to be lowered.

The content of the alcohol in the food improver is usually 1 to 10% by weight and preferably 2 to 5% by weight. When the content of the alcohol is too small, the effect of suppressing growth of microorganisms during storage of the food improver tends to be insufficient. When the content of the alcohol is too large, the obtained food improver tends to exhibit a disadvantageously strong alcohol odor.

Meanwhile, the food improver of the present invention may further comprise known additives such as emulsifiers other than the above-described emulsifiers, sweeteners, perfumes, vitamins and antioxidants unless the addition thereof causes adverse influence on the aimed effects of the present invention. Examples of the other emulsifiers include lecithin, lysolecithin, glycerol fatty acid esters and sorbitan fatty acid esters.

The thus produced food improver of the present invention may be further subjected, if required, to ordinary heat sterilization using a plate-type sterilizer, and then used as an improver for improving taste or properties of various beverages and foods.

Next, the food of the present invention is explained. The food of the present invention comprises the above food improver. Examples of the food include breads, confections, daily dishes, fillings, noodles, Japanese-style confections and marine paste products. The amount of the food improver added to the food is usually 0.1 to 50% by weight, preferably 1 to 30% by weight and more preferably 2 to 10% by weight.

A typical example of the food is a sponge cake. The sponge cake of the present invention comprises a wheat flour, a whole egg and a sugar at a weight ratio of 1:0.5 to 2:0.5 to 2, and is produced by baking these components to which the above food improver is added. The sponge cake exhibits a change in hardness of not more than 3.0 N between after preserving the sponge cake at 4°C for one day after the baking and after preserving the sponge cake at 4°C for one week after the baking as measured by a rheometer in which a degree of penetration of a plunger into the sponge cake upon measurement of each hardness is set to 15 mm.

The measurement using a rheometer may be carried out in the following manner. That is, the sponge cake is cut into a cake piece having a size of 40 mm (width) x 40 mm (length) x 25 mm (height). The cut cake piece is placed on a sample table of the rheometer ("CR-500DX" manufactured by Sun Science Co., Ltd.), and then a disk-like pressure sensitive shaft (diameter: 5 mm) fitted to the rheometer is moved down on an upper surface of the cake piece until a stress of 20 N is applied thereto, thereby compressing the cake piece. The hardness of the sponge cake is determined from the stress thus detected relative to a degree of penetration of the pressure sensitive shaft into the sponge cake. The hardness measurement is carried out in a laboratory maintained at a room temperature of 25°C and a humidity of 50 to 60%.

Meanwhile, the sponge cake of the present invention is produced from a wheat flour, a whole egg and a sugar by an ordinary method, and the amount of the food improver added to the sponge cake is as described above. In addition, the change in hardness of the sponge cake as defined above is preferably not more than 2.0 N and more preferably not more than 1.0 N.

Also, according to the present invention, there is provided the food improver which allows the sponge cake to which the food improver is added, to exhibit a change in hardness of not more than 3.0 N as measured by the following evaluation method.

The change in hardness of the sponge cake is determined as follows. That is, the sponge cake comprising a wheat flour, an egg and a sugar at the same weight ratio to which the food improver is added in an amount of 5% based on the wheat flour, is produced by baking, and then subjected to measurement of a hardness thereof after preserving the sponge cake at 4°C for one day after the baking and a hardness thereof after preserving the sponge cake at 4°C for one week after the baking by using a rheometer in which a degree of penetration of a plunger into the sponge cake upon measurement of each hardness is set to 15 mm.

Thus, the food improver may be characterized by the change in hardness of the sponge cake as a parameter. In this case, the change in hardness of the sponge cake to which the food improver is added is preferably not more than 2.0 N and more preferably not more than 1.0 N. Meanwhile, the sponge cake may be produced by an ordinary method, and the measurement method using a rheometer may be carried out by the same method as described above.

Examples

The present invention is described in more detail by Examples. However, the following Examples are only illustrative and not intended to limit the scope of the present invention thereto. Meanwhile, the "ratio", "%" and "part(s)" as used herein represent "weight ratio", "% by weight" and "part(s) by weight", respectively.

<Sponge cake>

Example 1:

Fifty grams of a sucrose stearic acid ester having an HLB value of 11 ("RYOTO SUGAR ESTER S-1170" produced by Mitsubishi-Kagaku Foods Corporation) were dispersed in 50 g of ethanol at room temperature, and then mixed with 700 g of an aqueous solution of an oligosaccharide "HI-MULTOSE MC-45" produced by Nippon Shokuhin Kakoh Co., Ltd., which was heated to 75°C (the aqueous solution comprised 610 g of an oligosaccharide solution and 90 g of desalted water; hereinafter referred to merely as an "oligosaccharide solution"), followed by stirring the resulting mixture for 30 min. On the other hand, 20 g of succinic acid monoglyceride ("STEP SS" produced by Kao Corp.) were dispersed in 180 g of desalted water, and the resulting dispersion was heated to 60°C while stirring, thereby obtaining a water dispersion comprising a lamellar structural component of succinic acid monoglyceride. The above oligosaccharide solution was cooled to 55°C, and the above water dispersion comprising the lamellar structural component of succinic acid monoglyceride was added thereto, followed by stirring the resulting dispersion for 20 min. Next, the obtained dispersion was cooled to 45°C to obtain 1000 g of a food improver (hereinafter referred to merely as an "improver A"). Meanwhile, the presence of the lamellar structural component of succinic acid monoglyceride in the improver A was determined by observing the improver A using a polarization microscope. With respect to the improver A, a polarization cross pattern was observed in a polarization microphotograph thereof, whereby it was confirmed that the improver composition comprised the lamellar structural component. In addition, the improver A was observed using a transmission electron microscope (TEM) to determine whether or not the lamellar structural component of succinic acid monoglyceride was present therein. As a result, it was confirmed that a layered structure was observed in a TEM micrograph of the improver A and, therefore, the improver composition comprised the lamellar structural component.

Using 100 parts of a wheat flour, 110 parts of a sugar, 100 parts of an egg, 1 part of a baking powder, 35 parts of desalted water, 10 parts of foamable emulsified fat and oil and 5 parts of the above prepared improver A, a dough was prepared by an all-in-mix method, and baked by an ordinary method to produce a sponge cake (cake A). The thus produced sponge cake was preserved at 4°C for one week to evaluate a change in water content of a crumb portion (inner soft portion) of the cake and a change in hardness thereof by measurement using a rheometer. The evaluation results are shown in Table 1.

Example 2:

Thirty five grams of a sucrose stearic acid ester having an HLB value of 11 ("RYOTO SUGAR ESTER S-1170" produced by Mitsubishi-Kagaku Foods Corporation) were dispersed in 50 g of ethanol at room temperature, and then mixed with 680 g of an aqueous solution of an oligosaccharide "OLIGOTOSE" produced by Sanwa Starch Industry Co., Ltd., (hereinafter referred to merely as an "oligosaccharide solution") which was heated to 75°C, followed by stirring the resulting mixture for 30 min. On the other hand, 35 g of succinic acid monoglyceride ("STEP SS" produced by Kao Corp.) were dispersed in 200 g of desalted water, and the resulting dispersion was heated to 60°C while stirring, thereby obtaining a water dispersion comprising a lamellar structural component of succinic acid monoglyceride. The above oligosaccharide solution was cooled to 55°C, and the above water dispersion comprising the lamellar structural component of succinic acid monoglyceride was added thereto, followed by stirring the resulting dispersion for 20 min. Next, the obtained dispersion was cooled to 45°C to obtain 1000 g of a food improver (hereinafter referred to merely as an "improver B"). Meanwhile, the presence of the lamellar structural component of succinic acid monoglyceride in the improver B was determined by observing the improver B using a polarization microscope.

Using the improver B, a sponge cake (cake B) was produced by the same baking method as defined in Example 1. The thus produced sponge cake was preserved at 4°C for one week to evaluate a change in water content of a crumb portion of the cake and a change in hardness thereof by measurement using a rheometer. The evaluation results are shown in Table 1.

Example 3:

The same procedure as defined in Example 2 was conducted except that a sucrose stearic acid ester having an HLB value of 5 ("RYOTO SUGAR ESTER S-570" produced by Mitsubishi-Kagaku Foods Corporation) was used in place of the sucrose stearic acid ester having an HLB value of 11, thereby preparing 1000 g of a food improver (hereinafter referred to merely as an "improver C"). Using the improver C, a sponge cake (cake C) was produced by the same baking method as defined in Example 1. The thus produced sponge cake was preserved at 4°C for one week to evaluate a change in water content of a crumb portion of the cake and a change in hardness thereof by measurement using a rheometer. The evaluation results are shown in Table 1.

Example 4:

The same procedure as defined in Example 2 was conducted except that a polyglycerol fatty acid ester ("RYOTO POLYGLYESTER S-10D" produced by Mitsubishi-Kagaku Foods Corporation) was used in place of the sucrose stearic acid ester, thereby preparing 1000 g of a food improver (hereinafter referred to merely as an "improver D"). Using the improver D, a sponge cake (cake D) was produced by the same baking method as defined in Example 1. The thus produced sponge cake was preserved at 4°C for one week to evaluate a change in water content of a crumb portion of the cake and a change in hardness thereof by measurement using a rheometer. The evaluation results are shown in Table 1.

Comparative Example 1:

The same procedure as defined in Example 1 was conducted except that no food improver was used, thereby baking and producing a sponge cake (cake E). The thus produced sponge cake was preserved at 4°C in the same manner as in Example 1, and subjected to evaluation of properties thereof. The evaluation results are shown in Table 1.

Table 1

|  | Improver | Cake | Change in water content after one day from baking ($\triangle$%) | Change in hardness after one day from baking ($\triangle$N) (Note*) |
|---|---|---|---|---|
| Example 1 | Improver A | Cake A | 0.6 | 1.0 |
| Example 2 | Improver B | Cake B | 2.2 | 0.7 |
| Example 3 | Improver C | Cake C | 2.2 | 2.0 |
| Example 4 | Improver D | Cake D | 2.9 | 0.7 |
| Comparative Example 1 | No improver | Cake E | 5.0 | 4.4 |
| Note*: Hardness was measured by setting a degree of penetration of a plunger to 15 mm | | | | |

From Table 1, it was confirmed that the cakes A to D to which the food improver of the present invention was added exhibited a less change in water content as compared to that of the cake E, and still maintained a hardness attained after the baking.

<Freezing bread dough>

Example 5 and Comparative Examples 2 and 3:

A freezing bread dough having a basic composition as shown in Table 2 was prepared, and then a bread of one-loaf type was produced therefrom through the following production steps.

[Production steps]

[1] Mixing and kneading of dough: low speed: 2 min; high speed: 5 min; kneading temperature: 25±0.5°C (mixer: "Shinagawa Type 5DM"; low speed: 141 rpm; high speed: 285 rpm)
[2] Fermentation: room temperature (27±1°C); 30 min
[3] Dividing and rounding: The dough was folded double and then divided into two masses, allowed to pass through a clearance of 3/8 inch between rolls of a molder "National Sheeter Molder" one time, and further folded in three twice.
[4] Aging: room temperature (27±1°C); 15 min
[5] Shaping: The aged dough was allowed to pass through a clearance of 3/8 inch between the sheeter rolls one time, turned 180°, and allowed to pass again through a clearance of 1/8 inch one time. At that time, the dough was curled around a dried end thereof and press-molded by 10 revolutions.
[6] Freezing: Immediately after the shaping, the dough was frozen at -30°C for 1 hr and received in a polyethylene bag, and then stored at -20°C in a frozen state (4 weeks and 8 weeks).
[7] Defrosting: After 4 weeks and 8 weeks, the dough was placed in a mold and transferred into a refrigerator. The molded used was of a one-loaf type having a upper peripheral size of 20.5 x 9.8 cm, a lower peripheral size of 18.9 x 8.5 cm and a depth of 8.0 cm (1445 cm$^3$ on the average). After 20 hr, the dough was transferred into a proofing oven in a fermentation chamber.
[8] Final proof (secondary fermentation): The dough was fermented at room temperature (30±1°C) under a humidity of not lower than 90% RH until reaching an upper periphery of the mold.
[9] Baking: The dough was baked at a temperature of 197±3°C for 23 min, cooled at room temperature for 40 min, and then enclosed in a polyethylene bag in a sealed state.

The thus prepared baked bread was subjected to measurement of a volume and a specific volume thereof. In addition, on the 2nd day and the third day after storing the product sealed in the polyethylene bag at room temperature (about 24°C), the product was sliced into a thickness of about 13 mm, and compressed by a plunger having a size of 32 mm x 32 mm until the volume of the product was reduced to 50% of its initial volume to measure a load applied thereupon using a creep meter, thereby determining a breaking strength (degree of retrogradation) thereof. Further, the product was evaluated by sensory test. The results of evaluation of the volume and specific volume of the product are shown in Table 3, the results of the breaking strength test are shown in Table 4, and the results of the sensory test are shown in Table 5.

Meanwhile, the evaluation of the sensory test as shown in Table 5 was carried out according to the following point ratings. That is, total 100 points include appearance: 30 points (volume: 10 points; crust (skin) color: 10 points; shape uniformity: 5 points; crust quality: 5 points); and crumb 70 points (crumb color: 10 points; texture (sudachi): 10 points; touch feel: 15 points; aroma: 10 points; taste: 25 points).

Table 2

| Formulation of materials: recipe of butter roll | | Example 5 | Comparative Example 2 | Comparative Example 3 |
|---|---|---|---|---|
| Name of Material | Material property and brand | Blending percentage (%) (Note*) | | |
| Wheat flour | Hard wheat flour | 100 | 100 | 100 |
| Water | Tap water | 50.0-53.0 | 50.0-53.0 | 50.0-53.0 |
| Yeast for frozen dough | Compressed | 5 | 5 | 5 |
| Salt | codex | 1.8 | 1.8 | 1.8 |

(continued)

| Formulation of materials: recipe of butter roll | | Example 5 | Comparative Example 2 | Comparative Example 3 |
|---|---|---|---|---|
| Name of Material | Material property and brand | Blending percentage (%) (Note*) | | |
| Sugar | First-class sugar | 10 | 10 | 10 |
| Skim milk powder | JAS | 3 | 3 | 3 |
| Egg | Whole egg | 10 | 10 | 10 |
| Shortening | JAS | 6 | 6 | 6 |
| Margarine | "PROSPER" produced by Tsukishima Food Co. | 6 | 6 | 6 |
| Improver | Commercial product or improver B | 5 (improver B) | 0 | 5 (commercial product) |
| Note*: L-ascorbic acid was added in an amount of 75 ppm in the respective Example and Comparative Examples. | | | | |

Table 3-1

| (Stored in a frozen state for 4 weeks, average value of four samples each) | | | |
|---|---|---|---|
| | Example 5 | Comparative Example 2 | Comparative Example 3 |
| Sample name | Improver B | No improver added | Commercial product |
| Percentage of improver added (% based on flour) | 5 | - | 5 |
| Final proof time (min) | 76 | 73 | 75 |
| Weight immediately after baking (g) | 320 | 320 | 320 |
| Volume immediately after baking (mL) | 1960 | 1889 | 1922 |
| Specific volume (mL/g) | 6.13 | 5.91 | 6.01 |

Table 3-2

| (Stored in a frozen state for 8 weeks, average value of four samples each) | | | |
|---|---|---|---|
| | Example 5 | Comparative Example 2 | Comparative Example 3 |
| Sample name | Improver B | No improver added | Commercial product |
| Percentage of improver added (% based on flour) | 5 | - | 5 |
| Final proof time (min) | 82 | 78 | 80 |
| Weight immediately after baking (g) | 319 | 319 | 319 |
| Volume immediately after baking (mL) | 1953 | 1843 | 1895 |
| Specific volume (mL/g) | 6.12 | 5.78 | 5.94 |

Table 4-1

| (Stored in a frozen state for 4 weeks) | | | | | | |
|---|---|---|---|---|---|---|
| | Example 5 | | Comparative Example 2 | | Comparative Example 3 | |
| Sample name | Improver B (5% based on flour) | | No improver added | | Commercial product (5% based on flour) | |
| Strain rate of 50%* | Load (gf) | Av. | Load (gf) | Av. | Load (gf) | Av. |
| 2nd Day after baking | 347;344; 341; 338 | 342.5 | 441;436; 435; 434 | 436.5 | 422;422; 418; 404 | 416.5 |
| 3rd Day after baking | 406;403; 401; 396 | 401.5 | 502;498; 497; 493 | 497.5 | 488;479; 470; 463 | 474.8 |
| Note*: The load values at a strain rate of 50% are measured values of four sliced samples except for maximum and minimum values among 6 sliced samples. | | | | | | |

Table 4-2

| (Stored in a frozen state for 8 weeks) | | | | | | |
|---|---|---|---|---|---|---|
| | Example 5 | | Comparative Example 2 | | Comparative Example 3 | |
| Sample name | Improver B (5% based on flour) | | No improver added | | Commercial product (5% based on flour) | |
| Strain rate of 50%* | Load (gf) | Av. | Load (gf) | Av. | Load (gf) | Av. |
| 2nd Day after baking | 373;365; 357; 350 | 361.3 | 461;457; 453; 453 | 456 | 441;439; 438; 432 | 437.5 |
| 3rd Day after baking | 424;421; 421; 417 | 420.8 | 518;518; 515; 514 | 516.3 | 498;494; 481; 479 | 488 |
| Note*: The load values at a strain rate of 50% are measured values of four sliced samples except for maximum and minimum values among 6 sliced samples. | | | | | | |

Table 5-1

| (Stored in a frozen state for 4 weeks) | | | |
|---|---|---|---|
| | Example 5 | Comparative Example 2 | Comparative Example 3 |
| Sample name | Improver B (5% based on flour) | No improver added | Commercial product (5% based on flour) |
| Appearance: 30 | 29.9 | 28.9 | 29.3 |
| Volume (10) | 9.9 | 9.6 | 9.7 |
| Color of crust (10) | 10 | 10 | 10 |
| Shape uniformity (5) | 5 | 4.8 | 4.9 |
| Crust quality (5) | 5 | 4.5 | 4.7 |
| Crumb: 70 | 69.8 | 65.2 | 66.4 |
| Color of crumb (10) | 10 | 9.4 | 9.6 |

(continued)

| (Stored in a frozen state for 4 weeks) | | | |
|---|---|---|---|
| | Example 5 | Comparative Example 2 | Comparative Example 3 |
| Sample name | Improver B (5% based on flour) | No improver added | Commercial product (5% based on flour) |
| Texture (10) | 9.8 | 9.3 | 9.5 |
| Touch feel (15) | 15 | 13.4 | 13.8 |
| Aroma (10) | 10 | 10 | 10 |
| Taste (25) | 25 | 23 | 23.5 |
| Total: 100 | 99.7 | 94.1 | 95.7 |

Table 5-2

| (Stored in a frozen state for 8 weeks) | | | |
|---|---|---|---|
| | Example 5 | Comparative Example 2 | Comparative Example 3 |
| Sample name | Improver B (5% based on flour) | No improver added | Commercial product (5% based on flour) |
| Appearance: 30 | 30 | 28.5 | 29.2 |
| Volume (10) | 10 | 9.4 | 9.7 |
| Color of crust (10) | 10 | 10 | 10 |
| Shape uniformity (5) | 5 | 4.7 | 4.9 |
| Crust quality (5) | 5 | 4.4 | 4.6 |
| Crumb: 70 | 69.8 | 64.5 | 65.8 |
| Color of crumb (10) | 10 | 9.4 | 9.6 |
| Texture (10) | 9.8 | 9.2 | 9.4 |
| Touch feel (15) | 15 | 13.4 | 13.8 |
| Aroma (10) | 10 | 10 | 10 |
| Taste (25) | 25 | 22.5 | 23 |
| Total: 100 | 99.8 | 93 | 95 |

From Tables 3 to 5, it was recognized that the bread obtained by baking the frozen bread dough comprising the food improver of the present invention had a large volume and a good retrogradation-retarding effect that can be sustained for one day or more, was excellent in crust quality, taste and touch feel, and exhibited the effect of suppressing occurrence of rough crust as compared to those comprising no food improver or the commercially available improver for bread dough.

<Low calorie madeleine>

Example 6:

A mixer bowl was charged with 100 parts of a whole egg, 5 parts of the improver B and 5 parts of a foamable emulsified fat and oil, and the resulting mixture was stirred at a high speed for 1 min by a mixer. Next, a half amount of a mixture comprising 100 parts of a soft wheat flour, 1 part of a baking powder, 80 parts of a sugar and 0.7 part of a salt was charged into the mixer, and the contents of the mixer were stirred at a high speed for 2 min. Then, a remaining half amount of the mixture was charged into the mixer, and the contents of the mixer was stirred at a low speed for 30 sec. The contents of the mixer were finally mixed with 50 parts of a butter and stirred at a low speed for 30 sec, thereby preparing a dough having a specific gravity of 0.8 to 0.9. The thus prepared dough was cast into a madeleine mold, and baked using a baking oven to obtain a low calorie madeleine. The madeleine after 2 days from the baking and that after being preserved at 20°C for one month were respectively subjected to a sensory test by 15 panelists. The evaluation results are shown in Table 6.

Comparative Example 4:

The same procedure as defined in Example 6 was conducted except that no improver B was added, thereby obtaining a low calorie madeleine. The madeleine after 2 days from the baking and that after being preserved at 20°C for one month were respectively subjected to a sensory test by 15 panelists. The evaluation results are shown in Table 6.
Table 6-1

| (After 2 days from baking) | | | |
|---|---|---|---|
| | Example 6 | Comparative Example 4 | No difference between Example 6 and Comparative Example 4 |
| Sample name | Improver B (5% based on flour) | No improver added | |
| Favor | 8 | 6 | 1 |
| Good flavor | 7 | 4 | 4 |
| Easy melting in the mouth | 12 | 2 | 1 |
| Wet feel | 10 | 3 | 2 |
| Soft feel | 11 | 1 | 3 |

Table 6-2

| (After preserved at 20°C for one month) | | | |
|---|---|---|---|
| | Example 6 | Comparative Example 4 | No difference between Example 6 and Comparative Example 4 |
| Sample name | Improver B (5% based on flour) | No improver added | |
| Favor | 9 | 4 | 2 |
| Good flavor | 6 | 3 | 6 |
| Easy melting in the mouth | 8 | 5 | 2 |
| Wet feel | 8 | 3 | 4 |
| Soft feel | 8 | 2 | 5 |

From Table 6, it was recognized that the low calorie madeleine prepared by adding the food improver of the present invention thereto was capable of maintaining good softness, wet feel and easy melting in the mouth even after the one-month preservation and, therefore, had a good water retention effect and a good retrogradation-suppression effect.

<LL pao de Castella>

Example 7:

A mixer bowl was charged with 910 parts of an whole egg and 35 parts of the improver B, and the resulting mixture was stirred at a high speed for 30 min. Next, 910 parts of a sugar, 4.2 parts of a common salt, 70 parts of water, 70 parts of a honey and 70 parts of a foamable emulsified fat and oil were added to the mixer, and the contents of the mixer were stirred at a low speed for 1 min and then at a medium speed for 2 min to uniformly disperse the respective raw materials. Further, 700 parts of a soft wheat flour and 7 parts of a baking powder were charged into the mixer, and the contents of the mixer were stirred at a low speed for 1 min and then at a high speed for 2 min, thereby preparing a dough having a specific gravity of 0.5. The thus prepared dough was cast into a stainless steel vat, and baked using a baking oven to obtain an LL pao de Castella. The LL pao de Castella after one day from the baking and those after being preserved at 4°C for 2 weeks and at 20°C for one month were respectively subjected to measurement of a change in hardness thereof using a rheometer. The evaluation results are shown in Table 7.

Comparative Example 5:

The same procedure as defined in Example 7 was conducted except that no improver B was added, thereby obtaining an LL pao de Castella. The LL pao de Castella after one day from the baking and those after being preserved at 4°C for 2 weeks and at 20°C for one month were respectively subjected to measurement of a change in hardness thereof using a rheometer. The evaluation results are shown in Table 7.

Table 7

|  | Improver | Change in hardness after preserved at 4°C for 2 weeks ($\triangle$N) (note*) | Change in hardness after preserved at 20°C for one month ($\triangle$N) (note*) |
|---|---|---|---|
| Example 7 | Improver B | 2.2 | 2.5 |
| Comparative Example 5 | No improver added | 3.2 | 6.8 |
| Note*: The hardness values as measured at a degree of penetration of a plunger of 15 mm was compared with that after one day from baking. | | | |

From Table 7, it was recognized that the LL pao de Castella to which the food improver of the present invention was added exhibited a less change in hardness as compared to that comprising no food improver, and still maintained a hardness of the LL pao de Castella as attained immediately after the baking.

<Frozen Chinese meat dumpling>

Examples 8 and 9 and Comparative Example 6:

A wrapping (coating) for Chinese meat dumplings was prepared according to the formulation shown in Table 8 under the following production conditions.
Table 8

| Formulation of materials | Example 8 | Example 9 | Comparative Example 6 |
|---|---|---|---|
|  | Blending amount (g) | | |
| Semi-hard wheat flour | 250 | 250 | 250 |
| Medium-hard wheat flour | 250 | 250 | 250 |
| Improver B | 5 | 15 | 0 |
| Common salt | 5 | 5 | 5 |
| Water | 200 | 200 | 200 |

[Production conditions]

[1] Mixer/kneader: Mixed and kneaded for 15 min using a horizontal kneader having a capacity of 800 g.
[2] Noodle making machine: 4-inch single roll

[3] Number of compounding operation: Compounded five times to prepare noodle bands each having a width of about 6 mm.

[4] Aging of noodle bands: None

[5] Number of roll-pressing operation: Roll-pressed five times to prepare noodle bands each having a width of about 0.7 to 0.8 mm.

[6] Die-blanking: Blanked into a circular shape having a diameter of about 7 cm.

The wrapping for Chinese meat dumplings immediately after being produced was subjected to measurement of a breaking strength and an elongation using a rheometer. The evaluation results are shown in Table 9.

Table 9

| | Improver | Breaking load (g) | Elongation (mm) |
|---|---|---|---|
| Example 8 | Improver B (3% based on flour) | 35.5 | 38.7 |
| Example 9 | Improver B (5% based on flour) | 28.7 | 43.8 |
| Comparative Example 6 | No improver added | 48.0 | 33.6 |
| Note: Plunger: Sphere with a diameter of 1 cm; up-down speed of table: 5 cm/min | | | |

From Table 9, it was confirmed that the wrapping to which the improver B was added was soft and exhibited a good elongation. Further, the thus produced wrapping for Chinese meat dumplings was preserved in a refrigerator for 5 days to observe a change in condition of the wrapping. As a result, it was confirmed that the wrapping to which the improver B was added was colored white, and such a tendency became more remarkable as the amount of the improver B added was increased.

In addition, the wrapping thus refrigerated was subjected to measurement of a breaking strength and an elongation using a rheometer. The evaluation results are shown in Table 10.

Table 10

| | Improver | Breaking load (g) | Elongation (mm) |
|---|---|---|---|
| Example 8 | Improver B (3% based on flour) | 28.0 | 53.3 |
| Example 9 | Improver B (5% based on flour) | 26.0 | 60.7 |
| Comparative Example 6 | No improver added | 52.0 | 44.7 |
| Note: Plunger: Sphere with a diameter of 1 cm; up-down speed of table: 5 cm/min | | | |

From Table 10, it was confirmed that the thus refrigerated wrapping to which the improver B was added was still soft and exhibited a good elongation.

Further, about 10 g of ingredients of Chinese meat dumpling was wrapped with the thus produced wrapping. The obtained Chinese meat dumplings were placed on a tray for Chinese meat dumpling, and steamed for 15 min in a steamer. Thereafter, the Chinese meat dumplings were cooled for 10 min while taking care so as not to be dried up, and then frozen in a freezer and preserved for 20 days. The frozen Chinese meat dumplings were taken out of the freezer, placed on a heated frying pan as such, and heated for about 30 sec. Then, the frying pan was charged with 100 mL of hot water and covered with a lid to bake the Chinese meat dumplings in the covered frying pan for about 3 min. After removing the lid, the Chinese meat dumplings were further baked for 1 min to form scorches thereon. After the elapse of 10 min and 60 min from the cooking, the Chinese meat dumplings were evaluated for their taste (hardness at jointed portions and side surfaces of the wrapping). The evaluation results are shown in Table 11.

Table 11-1

| | Kind of improver | Immediately after cooking | |
|---|---|---|---|
| | | Hardness at joint portions | Hardness at side surfaces |
| Example 8 | Improver B (3% based on flour) | ++ | ± |
| Example 9 | Improver B (5% based on flour) | ++ to +++ | - |
| Comparative Example 6 | No improver added | +++ | ± |

Table 11-2

| | After 10 min | | After 60 min | |
|---|---|---|---|---|
| | Hardness at joint portions | Hardness at side surfaces | Hardness at joint portions | Hardness at side surfaces |
| Example 8 | ++ | - | +++ | - |
| Example 9 | ++ | - to ± | ++ | - |
| Comparative Example 6 | ++++ | ± | +++++ | + |

Meanwhile, the symbols shown in the respective evaluation items of Table 11 represent the following ratings.

<Sensory test>

-: Not hard
±: Substantially not hard
+: Slightly hard
++: hard
+++: Considerably hard
++++: Very hard

From Table 11, it was recognized that when adding the food improver of the present invention to the wrapping of Chinese meat dumplings, the effect of preventing the wrapping from being hardened after heat-cooking with the passage of time was attained.

<Chilled Chinese noodle>

Examples 10 to 12 and Comparative Example 7:

The Chinese noodles were prepared according to the formulation shown in Table 12 under the following production conditions.
Table 12

| Formulation of materials | Example 10 | Example 11 | Example 12 | Comparative Example 7 |
|---|---|---|---|---|
| | Blending amount (g) | | | |
| Semi-hard wheat flour | 600 | 600 | 600 | 600 |
| Improver B | 6 | 18 | 30 | 0 |

(continued)

| Formulation of materials | Example 10 | Example 11 | Example 12 | Comparative Example 7 |
|---|---|---|---|---|
| | Blending amount (g) | | | |
| Alkali salt powder | 6 | 6 | 6 | 6 |
| Water | 228 | 228 | 228 | 228 |

[Production conditions]

[1] Mixer/kneader: Mixed and kneaded for 15 min using a horizontal kneader having a capacity of 800 g.

[2] Noodle making machine: 4-Inch single roll

[3] Number of compounding operation: Compounded five times to prepare noodle bands each having a width of about 6 mm.

[4] Aging of noodle bands: Aged at room temperature for about 1 hr.

[5] Number of roll-pressing operation: Roll-pressed five times to prepare noodle bands each having a width of about 1.5 mm.

[6] Cutting blade: #20

About 60 g of the noodles were placed in each of the same baskets, and boiled for 3 to 5 min. The boiled noodles in each basket were then washed with cold water. After draining off water from the noodles, a 3-fold diluted solution of a loosening agent "SOYA-UP" produced by Fuji Seiyu Co., Ltd., was twined around the boiled noodles in an amount of 3% based on the noodles. Then, the noodles were received in a container, and preserved in a refrigerator for 24 to 48 hr to evaluate a taste thereof by a sensory test. The evaluation results are shown in Table 13.

Table 13-1-1

| (After preserved in a refrigerator for 24 hr) | | | | |
|---|---|---|---|---|
| | Example 10 | | Example 11 | |
| | Boiled for 3 min | Boiled for 5 min | Boiled for 3 min | Boiled for 5 min |
| Hardness | 7.0 | 6.8 | 7.0 | 6.5 |
| Viscoelasticity | 17.7 | 17.5 | 17.8 | 17.4 |
| Smoothness | 7.0 | 7.0 | 7.0 | 7.0 |
| Retrogradation feel | ± | ± to - | ± to - | - |

Table 13-1-2

| (After preserved in a refrigerator for 24 hr) | | | | |
|---|---|---|---|---|
| | Example 12 | | Comparative Example 7 | |
| | Boiled for 3 min | Boiled for 5 min | Boiled for 3 min | Boiled for 5 min |
| Hardness | 6.8 | 6.3 | 7.0 | 6.8 |
| Viscoelasticity | 17.8 | 17.3 | 17.5 | 17.0 |
| Smoothness | 7.0 | 7.0 | 7.0 | 7.0 |
| Retrogradation feel | - | - | + | ± to + |

Table 13-2-1

| (After preserved in a refrigerator for 48 hr) | | | | |
|---|---|---|---|---|
| | Example 10 | | Example 11 | |
| | Boiled for 3 min | Boiled for 5 min | Boiled for 3 min | Boiled for 5 min |
| Hardness | 6.8 | 6.3 | 6.7 | 6.2 |
| Viscoelasticity | 17.5 | 16.8 | 17.4 | 16.7 |
| Smoothness | 7.0 | 7.0 | 7.0 | 7.0 |
| Retrogradation feel | + | - | ± to + | - |

Table 13-2-2

| (After preserved in a refrigerator for 48 hr) | | | | |
|---|---|---|---|---|
| | Example 12 | | Comparative Example 7 | |
| | Boiled for 3 min | Boiled for 5 min | Boiled for 3 min | Boiled for 5 min |
| Hardness | 6.6 | 6.3 | 7.0 | 6.5 |
| Viscoelasticity | 17.5 | 17.1 | 17.5 | 16.8 |
| Smoothness | 7.0 | 7.0 | 7.0 | 7.0 |
| Retrogradation feel | ± | - | ++ | + |

Meanwhile, the numerals and symbols shown in the respective evaluation items of Table 13 represent the following ratings.

<Hardness>

4: Considerably poor
5: Somewhat poor
6: Slightly poor
7: Normal
8: Slightly good
9: Somewhat good
10: Considerably good

<Viscoelasticity>

10: Considerably poor
12.5: Somewhat poor
15: Slightly poor
17.5: Normal
20: Slightly good
22.5: Somewhat good
25: Considerably good

<Smoothness>

4: Considerably poor
5: Somewhat poor
6: Slightly poor
7: Normal
8: Slightly good
9: Somewhat good
10: Considerably good

<Retrogradation feel>

-: No dry and crumbly feel nor retrogradation feel
±: Somewhat dry and crumbly feel
+: Hard, dry and crumbly feel
++: Strong hard, dry and crumbly feel

From Table 13, it was recognized that when using the food improver of the present invention in chilled Chinese noodles prepared from the boiled uncooked Chinese noodles, the Chinese noodles were prevented from suffering from dry and crumbly feel as well as retrogradation.

<Chinese dried noodle>

Examples 13 to 15 and Comparative Example 8: (In the respective Examples and Comparative Example, the noodles comprising no loosening agent are represented by (a), whereas those comprising a loosening agent are represented by (b))

Chinese dried noodles were prepared according to the formulation shown in Table 14 under the following production conditions.

Table 14

| Formulation of materials | Example 13 | Example 14 | Example 15 | Comparative Example 8 |
|---|---|---|---|---|
| | Blending amount (g) | | | |
| Semi-hard wheat flour | 600 | 600 | 600 | 600 |
| Improver B | 6 | 18 | 30 | 0 |
| Soft gluten | 12 | 12 | 12 | 12 |
| Alkali salt powder | 6 | 6 | 6 | 6 |
| Water | 228 | 228 | 228 | 228 |

[Production conditions]

[1] Mixer/kneader: Mixed and kneaded for 15 min using a horizontal kneader having a capacity of 800 g.
[2] Noodle making machine: 4-Inch single roll
[3] Number of compounding operation: Compounded five times to prepare noodle bands each having a width of about 6 mm.
[4] Aging of noodle bands: Aged at room temperature for about 1 hr.
[5] Number of roll-pressing operation: Roll-pressed five times to prepare noodle bands each having a width of about 1.2 mm.
[6] Cutting blade: #20
[7] Drying: Suspended on a rod and dried at room temperature.

About 50 g of the noodles were placed in each of the same baskets, and boiled for 3 to 4 min. The boiled noodles in each basket were then washed with cold water. After draining off water from the noodles, a 3-fold diluted solution of a loosening agent "SOYA-UP" produced by Fuji Seiyu Co., Ltd., was twined around a part of the boiled noodles in an amount of 3% based on the noodles, whereas a remaining part of the boiled noodles was kept untwined with the loosening agent. Then, the loosening agent-twined noodles and the untwined noodles were received in the respective containers, and preserved in a refrigerator for 24 to 48 hr to evaluate a taste thereof by a sensory test. In addition, the yield of the boiled noodles was calculated according to the following formula.

$$\texttt{Boiling yield = [weight of noodles (dried noodles)}$$

$$\texttt{after boiled]/[weight of noodles before boiled]}$$

The evaluation results of the sensory test are shown in Table 15, and the calculation results of the yield are shown in Table 16. Meanwhile, the symbols shown in the respective evaluation items of Table 15 represent the following ratings.

<Retrogradation feel>

-: No dry and crumbly feel nor retrogradation feel
$\pm$: Somewhat dry and crumbly feel
+: Hard, dry and crumbly feel
++: Strong hard, dry and crumbly feel

<Loosening>

-: Readily loosened
$\pm$: Loosened
+: Somewhat hardly loosened
++: Hardly loosened

Table 15-1-1

| (After preserved in a refrigerator for 24 h; no loosening agent) | | | | |
|---|---|---|---|---|
| | Example 13(a) | | Example 14(a) | |
| | Boiled for 3 min | Boiled for 4 min | Boiled for 3 min | Boiled for 4 min |
| Hardness | 7.1 | 6.6 | 6.8 | 6.4 |
| Viscoelasticity | 17.6 | 17.5 | 17.5 | 17.4 |
| Smoothness | 7.2 | 7.2 | 7.1 | 7.2 |
| Retrogradation fell | $\pm$ | $\pm$ to - | $\pm$ to - | - |
| Loosening | + | $\pm$ to + | $\pm$ to + | $\pm$ to + |

Table 15-1-2

| (After preserved in a refrigerator for 24 h; no loosening agent) | | | | |
|---|---|---|---|---|
| | Example 15(a) | | Comparative Example 8(a) | |
| | Boiled for 3 min | Boiled for 4 min | Boiled for 3 min | Boiled for 4 min |
| Hardness | 6.5 | 6.3 | 7.0 | 6.8 |
| Viscoelasticity | 17.4 | 17.2 | 17.5 | 17.3 |
| Smoothness | 7.5 | 7.2 | 7.0 | 7.2 |
| Retrogradation fell | - | - | $\pm$ to $\pm$ | $\pm$ to + |
| Loosening | - | + | + | $\pm$ to + |

Table 15-2-1

| (After preserved in a refrigerator for 24 h; no loosening agent) | | | | |
|---|---|---|---|---|
| | Example 13(b) | | Example 14(b) | |
| | Boiled for 3 min | Boiled for 4 min | Boiled for 3 min | Boiled for 4 min |
| Hardness | 6.9 | 6.7 | 6.7 | 6.9 |
| Viscoelasticity | 17.6 | 17.5 | 17.7 | 17.5 |
| Smoothness | 7.1 | 7.1 | 7.2 | 7.2 |
| Retrogradation fell | $\pm$ to + | $\pm$ | $\pm$ | - |

Table 15-2-2

| (After preserved in a refrigerator for 48 h; the loosening agent was used) | | | | |
|---|---|---|---|---|
| | Example 15(b) | | Comparative Example 8(b) | |
| | Boiled for 3 min | Boiled for 4 min | Boiled for 3 min | Boiled for 4 min |
| Hardness | 6.5 | 6.2 | 7.0 | 6.8 |
| Viscoelasticity | 17.2 | 17.0 | 17.5 | 17.4 |
| Smoothness | 7.0 | 7.0 | 7.0 | 7.0 |
| Retrogradation feel | - | - | + | $\pm$ to + |

Table 16-1

| | Example 14 | | Example 15 | |
|---|---|---|---|---|
| | Boiled for 3 min | Boiled for 4 min | Boiled for 3 min | Boiled for 4 min |
| Weight before boiling (g) | 51.6 | 51.6 | 50.9 | 51.3 |
| Weight after boiling (g) | 130.9 | 153.0 | 141.9 | 158.0 |
| Boiling yield (%) | 253.6 | 296.5 | 278.8 | 308.0 |

Table 16-2

|  | Example 16 | | Comparative Example 8 | |
| --- | --- | --- | --- | --- |
|  | Boiled for 3 min | Boiled for 4 min | Boiled for 3 min | Boiled for 4 min |
| Weight before boiling (g) | 50.2 | 51.3 | 50.3 | 50.1 |
| Weight after boiling (g) | 159.8 | 166.1 | 131.7 | 144.7 |
| Boiling yield (%) | 318.3 | 323.8 | 261.8 | 288.8 |

From Tables 15 and 16, it was recognized that when using the food improver of the present invention in the Chinese noodles, the resulting noodles were prevented from suffering from dry and crumbly feel, and exhibited a good loosening effect, an enhanced boiling yield and a good taste.

<Instant fried noodle>

Examples 16 to 18 and Comparative Example 9:

Instant fried noodles were prepared according to the formulation shown in Table 17 under the following production conditions.
Table 17

| Formulation of materials | Example 16 | Example 17 | Example 18 | Comparative Example 9 |
| --- | --- | --- | --- | --- |
|  | Blending amount (g) | | | |
| Medium hard wheat flour | 500 | 500 | 500 | 500 |
| Dried egg albumen powder | 5 | 5 | 5 | 5 |
| Improver B | 1 | 3 | 5 | 0 |
| Common salt | 5 | 5 | 5 | 5 |
| Alkali salt powder | 1.5 | 1.5 | 1.5 | 1.5 |
| Water | 170 | 170 | 170 | 170 |

[Production conditions]

[1] Mixer/kneader: Mixed and kneaded for 15 min using a horizontal kneader having a capacity of 800 g.
[2] Noodle making machine: 4-Inch single roll
[3] Number of compounding operation: Compounded five times to prepare noodle bands each having a width of about 6 mm.
[4] Aging of noodle bands: None
[5] Number of roll-pressing operation: Roll-pressed five times to prepare noodle bands each having a width of about 1.1 mm.
[6] Cutting blade: #20
[7] Steaming condition: Steamed for 90 sec.
[8] Frying condition: Fried at a temperature of 130 to 140°C for 90 sec.

The respective fried noodles were received in a foamed polystyrene container, and hot water heated to 80°C was poured into the container. After closing the container with an aluminum foil as a lid and allowing the noodles to stand for 5 min therein, the thus hot water-reconstituted noodles were evaluated for taste and degree of reconstitution thereof. The evaluation results are shown in Table 18.
Table 18

|  | Degree of reconstitution | Taste |
|---|---|---|
| Example 16 | to + | Somewhat hard but good taste |
| Example 17 | + | Melted and "drenched" taste |
| Example 18 | + | Melted and "drenched" taste |
| Comparative Example 9 | - to ± | Hard and "dried" feel; insufficiently reconstituted with hot water |

Meanwhile, the symbols shown in the evaluation item of Table 18 represent the following ratings.

<Degree of reconstitution>

-: Insufficient
±: Slightly insufficient
+: Sufficiently reconstituted

From Table 18, it was recognized that when using the food improver of the present invention in the fried noodles, the resulting noodles were able to be well reconstituted with hot water heated to 80°C, and exhibited a good taste.

<Rice cake>

Examples 19 to 21 and Comparative Example 10:

Rice cakes were prepared according to the formulation shown in Table 19 under the following production conditions.
Table 19

| Formulation of materials | Example 19 | Example 20 | Example 21 | Comparative Example 10 |
|---|---|---|---|---|
|  | Blending amount (g) | | | |
| Glutinous rice flour | 400 | 400 | 400 | 400 |
| Water | 300 | 300 | 300 | 300 |
| Improver B | 8 | 15 | 20 | 0 |
| Dissolving water for improver B | 8 | 8 | 8 | 8 |

[Production conditions]

[1] Rice flour was received in a bowl, and mixed with water and then kneaded until the flour was well formed into a dough in the form of one mass.
[2] The thus kneaded dough was divided into fist-sized masses, and each mass was collapsed into a thickness of about 2 cm and steamed for 30 min in a steamer.
[3] The thus steamed dough was kneaded with a hook in a cake mixer for 10 min.
[4] In the case of adding the improver B to the dough, the improver B in the form of a solution thereof in water was added 6 min after initiation of the kneading.
[5] The thus kneaded dough was divided into masses each having a weight of 25 to 30 g, and packed in a container, followed by closing the container by wrapping or with a lid so as not to dry a surface thereof.

The thus produced dough for rice cakes was preserved in a refrigerator maintained at a temperature of 5 to 7°C or in a cryostatic (low-temperature) container maintained at 10°C to measure a change in hardness of the dough using a rheometer. Using a plunger of a sagittate shape, a load required for penetrating the plunger by 1 cm in depth into the dough for rice cakes was measured. The load was measured at 5 positions for each sample to calculate an average value of the thus measured loads. The evaluation results are shown in Table 20.

Table 20-1

| | Hardness (g) | | | |
|---|---|---|---|---|
| | 0th day | | 1st day | |
| | Refrigerator | Cryostatic container | Refrigerator | Cryostatic container |
| Example 19 | 36 | 36 | 139 | 84 |
| Example 20 | 37 | 37 | 106 | 83 |
| Example 21 | 40 | 40 | 116 | 79 |
| Comparative Example 10 | 31 | 31 | 218 | 130 |

Table 20-2

| | Hardness (g) | | | |
|---|---|---|---|---|
| | 2nd day | | 3rd day | |
| | Refrigerator | Cryostatic container | Refrigerator | Cryostatic container |
| Example 19 | 438 | 231 | 900 | 478 |
| Example 20 | 545 | 184 | 897 | 453 |
| Example 21 | 335 | 144 | 743 | 340 |
| Comparative Example 10 | 618 | 494 | 980 | 870 |

From Table 20, it was recognized that when using the food improver of the present invention in rice cakes, the resulting rice cakes were prevented from suffering from a significant change in hardness as well as retrogradation thereof.

<Non-glutinous rice dumpling>

Examples 22 and 23 and Comparative Example 11:

Non-glutinous rice dumplings were prepared according to the formulation shown in Table 21 under the following production conditions.
Table 21

| Formulation of materials | Example 22 | Example 23 | Comparative Example 11 |
|---|---|---|---|
| | Blending amount (g) | | |
| Non-glutinous rice flour | 400 | 400 | 400 |
| Water | 300 | 320 | 300 |
| Improver B | 20 | 20 | 0 |

[Production conditions]

[1] Non-glutinous rice flour was received in a bowl, and mixed with water and then kneaded until the flour was well formed into a dough in the form of one mass.

[2] The thus kneaded dough was divided into fist-sized masses, and each mass was collapsed into a thickness of about 2 cm and steamed for 30 min in a steamer.

[3] The thus steamed dough was kneaded with a hook in a cake mixer for 10 min.

[4] In the case of adding the improver B to the dough, the improver B in the form of a solution thereof in water was added 6 min after initiation of the kneading.

[5] The thus kneaded dough was divided into masses each having a weight of 25 to 30 g, and packed in a container, followed by closing the container by wrapping or with a lid so as not to dry a surface thereof.

The thus produced dough for non-glutinous rice dumplings was preserved in a refrigerator maintained at 5°C or in a cryostatic container maintained at 10°C to measure a change in hardness of the dough using a rheometer. Using a plunger of a sagittate shape, a load required for penetrating the plunger by 1 cm in depth into the dough for non-glutinous rice dumplings was measured. The load was measured at 5 positions for each sample to calculate an average value of the thus measured loads. The evaluation results are shown in Table 22.

Table 22-1

| | Hardness (g) | | | |
| --- | --- | --- | --- | --- |
| | 0th day | | 1st day | |
| | Refrigerator | Cryostatic container | Refrigerator | Cryostatic container |
| Example 22 | 66.0 | 66.0 | 594.5 | 427.8 |
| Example 23 | 55.2 | 55.2 | 506.7 | 338.0 |
| Comparative Example 11 | 79.8 | 79.8 | 885.0 | 638.0 |

Table 22-2

| | Hardness (g) | |
| --- | --- | --- |
| | 2nd day | |
| | Refrigerator | Cryostatic container |
| Example 22 | 1050.0 | 767.0 |
| Example 23 | 900.0 | 642.0 |
| Comparative Example 11 | 1200.0 | 953.0 |

From Table 22, it was recognized that when using the food improver of the present invention in the non-glutinous rice dumplings, the resulting non-glutinous rice dumplings were prevented from suffering from a significant change in hardness as well as retrogradation thereof.

<Bean jam>

Example 24:

A black strained bean jam having a Brix degrees of 43 was prepared by adding thereto the improver B in an amount of 1.5% based on a total amount of the bean jam. The thus prepared bean jam was weighed in an amount of 10 g, and subjected to centrifugal separation using a centrifugal separator at 3000 rpm for 1 min to evaluate a degree of removal of water (honey) therefrom. As a result, it was confirmed that no removal of water from the bean jam was caused.

Comparative Example 12:

The same procedure as defined in Example 24 was conducted except that none of the improver B was added, thereby preparing a black strained bean jam having a Brix degrees of 43. The thus prepared bean jam was weighed in an amount of 10 g, and subjected to centrifugal separation using a centrifugal separator at 3000 rpm for 1 min to evaluate a degree of removal of water (honey) therefrom. As a result, it was confirmed that 0.08 g of water was removed from the bean jam.

**Claims**

1.  A food improver comprising a dispersion formed by dispersing a lamellar structural component of an organic acid monoglyceride in an aqueous solution comprising an emulsifier and a sugar.

2.  A food improver according to claim 1, wherein the emulsifier is a sucrose fatty acid ester or a polyglycerol fatty acid ester.

3.  A food improver according to claim 1 or 2, wherein the sugar is an oligosaccharide.

4.  A food improver according to any one of claims 1 to 3, wherein the organic acid monoglyceride is succinic acid monoglyceride.

5.  A food comprising the feed improver as defined in any one of claims 1 to 4.

6.  A sponge cake comprising a wheat flour, a whole egg and a sugar at a weight ratio of 1:0.5 to 2:0.5 to 2, the sponge cake being produced by baking these components to which the food improver as defined in any one of claims 1 to 4 is added,
    wherein when the sponge cake is subjected to measurement of a hardness thereof after preserving the sponge cake at 4°C for one day after the baking and a hardness thereof after preserving the sponge cake at 4°C for one week after the baking by using a rheometer in which a degree of penetration of a plunger into the sponge cake upon measurement of each hardness is set to 15 mm, a change in hardness of the sponge cake between after the one-day preservation and after the one-week preservation is not more than 3.0 N.

7.  A food improver which allows a sponge cake to which the fluid improver is added, to exhibit a change in hardness of not more than 3.0 N as measured by the following evaluation method:

    The sponge cake comprising a wheat flour, an egg and a sugar at the same weight ratio to which the food improver is added in an amount of 5% based on the wheat flour, is produced by baking, and then subjected to measurement of a hardness thereof after preserving the sponge cake at 4°C for one day after the baking and a hardness thereof after preserving the sponge cake at 4°C for one week after the baking by using a rheometer in which a degree of penetration of a plunger into the sponge cake upon measurement of each hardness is set to 15 mm, to determine the change in hardness of the sponge cake between after the one-day preservation and after the one-week preservation.

8.  A food comprising the food improver as defined in claim 7.

## INTERNATIONAL SEARCH REPORT

| | International application No. |
|---|---|
| | PCT/JP2007/001304 |

A. CLASSIFICATION OF SUBJECT MATTER
*A23L1/03(2006.01)i, A21D13/08(2006.01)i*

According to International Patent Classification (IPC) or to both national classification and IPC

B. FIELDS SEARCHED

Minimum documentation searched (classification system followed by classification symbols)
A23L1/03, A21D13/08

Documentation searched other than minimum documentation to the extent that such documents are included in the fields searched
Jitsuyo Shinan Koho          1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)
CAplus(STN), WPIDS(STN), JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X | JP 08-205758 A  (Dai-Ichi Kogyo Seiyaku Co., Ltd.), 13 August, 1996 (13.08.96), Full text (Family: none) | 1-8 |
| X | JP 04-354528 A  (Kabushiki Kaisha Amakosu), 08 December, 1992 (08.12.92), Full text (Family: none) | 1-8 |
| X | JP 11-123056 A  (Dai-Ichi Kogyo Seiyaku Co., Ltd.), 11 May, 1999 (11.05.99), Full text (Family: none) | 1-5,7-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 January, 2008 (17.01.08) | 29 January, 2008 (29.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

26

**INTERNATIONAL SEARCH REPORT**

| International application No. |
|---|
| PCT/JP2007/001304 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 09-154520 A  (Dai-Ichi Kogyo Seiyaku Co., Ltd.),<br>17 June, 1997 (17.06.97),<br>Full text<br>(Family: none) | 1-5,7-8 |
| X | JP 08-242804 A  (Dai-Ichi Kogyo Seiyaku Co., Ltd.),<br>24 September, 1996 (24.09.96),<br>Full text<br>(Family: none) | 1-5,7-8 |
| A | JP 2006-075137 A  (Riken Vitamin Co., Ltd.),<br>23 March, 2006 (23.03.06),<br>Full text<br>(Family: none) | 1-8 |
| A | JP 2004-329154 A  (Dai-Ichi Kogyo Seiyaku Co., Ltd.),<br>25 November, 2004 (25.11.04),<br>Full text<br>(Family: none) | 1-8 |
| A | JP 2004-016187 A  (Miyoshi Oil & Fat Co., Ltd.),<br>22 January, 2004 (22.01.04),<br>Full text<br>(Family: none) | 1-8 |

Form PCT/ISA/210 (continuation of second sheet) (April 2007)

**INTERNATIONAL SEARCH REPORT**

International application No.

PCT/JP2007/001304

The quality improving agent for foods described in claims 7-8 is intended to specify the invention by the results brought about, and includes every substance having the property specified as such. However, what is disclosed within the meaning of PCT Article 5 is only a substance comprising a lamella structure of succinic acid monoglyceride dispersed in an aqueous solution containing an emulsifying agent and an oligosaccharide, and the other substances are not sufficiently supported within the meaning of PCT Article 6.

Further, the quality improving agent for foods described in claims 7-8, for which the invention is specified by the results brought about, cannot specify the range of substances having such a property even if the technical knowledge at the time of filing is considered. Therefore, claims 7-8 also lack the requirement of clarity under PCT Article 6.

Thus, a search was carried out only for the above invention supported by the disclosure of the description.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5236919 A
- JP 2001095489 A
- JP 2003088306 A
- JP 2003235474 A
- JP 5084046 A